Europäisches Patentamt

European Patent Office

Office européen des brevets

(11) Publication number: **0 322 217 B1**

# EUROPEAN PATENT SPECIFICATION

(45) Date of publication of patent specification: **15.07.92**    (51) Int. Cl.5: **B01J 3/06**, C01B 31/06

(21) Application number: **88312120.4**

(22) Date of filing: **21.12.88**

(54) **Diamond synthesis.**

(30) Priority: **21.12.87 ZA 879557**

(43) Date of publication of application:
**28.06.89 Bulletin  89/26**

(45) Publication of the grant of the patent:
**15.07.92 Bulletin  92/29**

(84) Designated Contracting States:
**AT BE CH DE ES FR GB GR IT LI LU NL SE**

(56) References cited:
**EP-A- 0 157 393**

**PATENT ABSTRACTS OF JAPAN, vol. 6, no.
11 (C-88)[889], 22nd January 1982;**

**PATENT ABSTRACTS OF JAPAN, vol. 5, no.
136 (C-69)[808], 28th August 1981;**

**DIE NATURWISSENSCHAFTEN, vol. 59, no. 1,
January 1972, pages 1-7, Springer-Verlag,
Berlin, DE; H.M. STRONG et al.: "The growth
of large diamond crystals"**

(73) Proprietor: **DE BEERS INDUSTRIAL DIAMOND
DIVISION (PROPRIETARY) LIMITED
8th Floor 45 Main Street
Johannesburg Transvaal(ZA)**

(72) Inventor: **Davies, Geoffrey John
36 Boundary Road Linden Extension Randburg
Transvaal(ZA)**
Inventor: **Burns, Robert Charles
15 Los Angeles Drive
Northcliff Transvaal(ZA)**
Inventor: **Gardner, Stephen
1 Strandloper Road Terenure Ext. 8
Kempton Park Transvaal(ZA)**

(74) Representative: **Ellis-Jones, Patrick George
Armine et al
J.A. KEMP & CO. 14 South Square Gray's Inn
London WC1R 5EU(GB)**

EP 0 322 217 B1

# Description

## BACKGROUND OF THE INVENTION

This invention relates to diamond synthesis.

The synthesis of diamonds using high pressure/high temperature technology has become very well established commercially. This process involves exposing a carbon source to temperatures and pressures in the diamond stable region of the carbon phase diagram in the presence of a suitable catalyst/solvent. Catalysts/solvents useful in diamond synthesis are well known and include metals of Group VIII of the Periodic Table.

While most commercial processes for synthesising diamond produce small or relatively small particles, there are processes known for producing much larger diamonds. These processes generally involve producing the diamond in a reaction vessel in which a diamond seed material is separated from a source of substantially pure carbon by a mass of metallic catalyst/solvent such that during synthesis a predetermined temperature gradient between the diamond seed material and the source of carbon is created. The diamond seed material is located at a point at which the temperature of the reaction medium will be near the minimum value whilst the source of carbon is placed at a point where the temperature will be near its maximum. A layer of diamond nucleation suppressing material and/or an isolating material is interposed between the mass of metallic catalyst/solvent and the diamond seed material. By way of illustration, reference in this regard may be had to the disclosures of United States Patent Specifications Nos. 4,340,576, 4,073,380, 4,034,066, 4,301,134, 3,297,407, 4,322, 396 and 4,287,168.

## SUMMARY OF THE INVENTION

According to the present invention, there is provided a method of producing diamond crystals including the steps of placing a reaction vessel in the reaction zone of a high temperature/high pressure apparatus, the reaction vessel containing seed material consisting solely of tetrahedrally bonded crystalline non-diamond seed material separated from a source of substantially pure carbon by a mass of metallic catalyst/solvent for diamond synthesis, there being no isolating layer or nucleation suppressing layer disposed between the seed material and the mass of metallic catalyst/solvent and the non-diamond seed material being unable to react to any significant extent with the metallic catalyst/solvent and having a melting point above that of the metallic catalyst/solvent under the applied conditions of temperature and pressure, subjecting the contents of the reaction vessel to conditions of temperature and pressure in the diamond stable region of the carbon phase diagram such that a temperature gradient is created between the seed material and the carbon source with the seed material being located at a point near the minimum value of temperature for the temperature gradient and the source of carbon being located at a point near the maximum value of temperature for the temperature gradient, and maintaining these conditions for a time sufficient to produce large diamond crystals on the seed material.

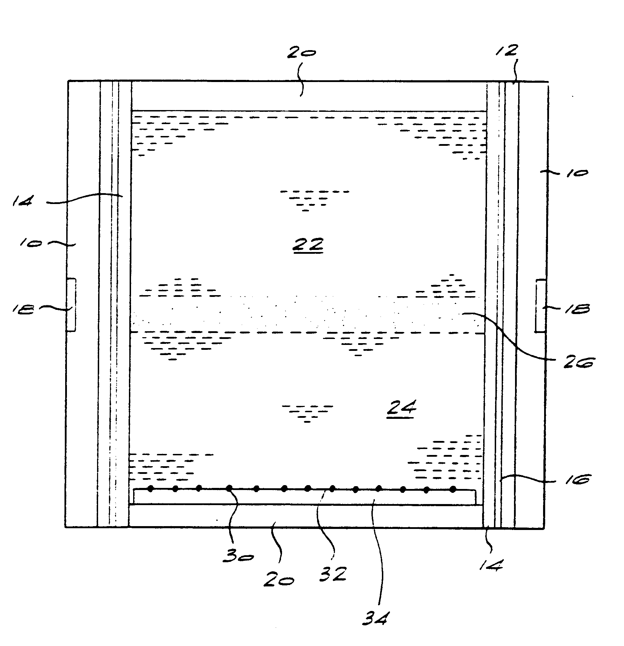

## DESCRIPTION OF THE DRAWING

The drawing illustrates a sectional side view of an embodiment of a reaction vessel of the invention.

## DETAILED DESCRIPTION OF THE INVENTION

One of the advantages of the invention is that diamond may be grown without an isolating layer or nucleation suppressing layer being present in the reaction vessel. The diamond seed material will not dissolve in the metallic catalyst/solvent during the time when this catalyst/solvent is being saturated with carbon from the carbon source. This greatly simplifies and also improves the economies of producing large diamond particles.

The non-diamond seed material will preferably be of sphalerite or wurzite structure.

The preferred sphalerite structure materials for seeds are those with lattice parameters close to that of diamond such as cubic boron nitride, $\beta$-silicon carbide, boron phosphide and aluminium phosphide.

Examples of materials of wurzite structure that can be used as seeds are aluminium nitride and boron nitride.

Tetrahedrally bonded $\alpha$-silicon carbide has also been found to be a particularly suitable seed material.

The seeds will preferably be located in a surface of a pad made of a suitable material such as wonderstone.

The seed material may be individual crystals or they may be crystals or points on a large mass. For example, the seed material may form part of a surface containing a plurality of seed points projecting from the surface. Diamond growth on each of the seed points will occur.

An embodiment of the invention will now be described with reference to the accompanying drawing. Referring to this drawing, there is shown a reaction vessel comprising an outer sleeve 10 made of magnesite enclosing a heater sleeve 12 and a wonderstone sleeve 14. Separating the wonderstone sleeve 14 and the heater sleeve 12 is a tantalum sleeve 16. A mild steel ring 18 is provided in the magnesite sleeve 10 intermediate its ends. This ring serves to minimise bulging of the sleeves during diamond synthesis. End caps 20 of wonderstone are provided to enclose within the sleeve assembly a reaction volume.

Placed within the reaction volume are the materials necessary for diamond synthesis. These materials include two masses 22, 24 of metallic diamond catalyst/solvent. Sandwiched between these two masses is a mass 26 of a pure carbon source.

Non-diamond seed crystals 30 are partially embedded in the upper surface 32 of a ceramic pad 34. These seed crystals can alternatively be located in depressions or recesses formed in this surface.

The metallic catalyst/solvent can be any one of a number of metals or alloys known in the art and set out fully in the above-mentioned United States patent specifications.

The carbon source is typically a pure graphite or fine diamond particles.

In use, the reaction vessel is placed in the reaction zone of a conventional high pressure/high temperature apparatus. The pressure of the reaction zone is increased and the temperature thereafter increased to bring the conditions within the reaction volume into the diamond stable region of the carbon phase diagram. Typical applied pressures are 50 to 70 kilobars, while typical applied temperatures are 1450 to 1650°C. Under these conditions, a temperature gradient is created within the mass 24 such that the highest temperature of this gradient is in the region of the carbon source whilst the lowest temperature of this gradient is in the region of the seed crystals. The elevated temperature and pressure conditions are maintained for a period of several hours and typically 24 hours or longer. During this time, the carbon source material dissolves in the mass 24 and diffuses downwards. The carbon atoms from the carbon source diffusing downwards eventually reach the seed crystals and cause diamond growth on these seed crystals to occur. As the seed crystals do not react with catalyst/solvent to any significant extent, no isolating layer or nucleation suppressing layer is necessary. The size of the diamond crystals produced vary according to the time for which the elevated temperature and pressure conditions are maintained. Generally the diamond crystals produced will be at least 0,2 carats in size. However, much larger crystals, i.e. 1mm or larger, can be produced on the non-diamond seeds. Separation of the diamond crystals from the non-diamond seeds is readily achieved.

Examples of the invention will now be described.

## EXAMPLE 1

A reaction vessel was prepared in the manner described above. The seed material was good quality cubic boron nitride crystals having an average size in the range 600 to 850 microns. The seeds were partially embedded in a ceramic pad in contact with a cobalt mass 24. The seeds were oriented such that naturally occurring {111} faces were vertical and exposed to the metallic mass 24. Diamond synthesis temperature and pressure conditions of 1500°C and 60 kilobars were maintained for a period of 30 hours and after this time each seed had reached a mass of approximately 0,5 carats, the increase in mass being diamond. Increasing the period in the diamond stable region to 42 hours resulted in diamond growth of 0,9 carats on the seed material being achieved.

## EXAMPLE 2

The procedure set out in Example 1 was followed except that the cubic boron nitride particles had a size of 250 to 300 microns and the diamond synthesis conditions were maintained for a period of only 15 hours. Diamond growth on each seed took place with the diamond mass on each seed being approximately 0,25 carats.

## EXAMPLE 3

The procedure set out in Example 1 was followed save that the seed material used was $\alpha$-silicon carbide crystals having an average particle size of 1200 to 1400 microns. The seeds were positioned in the ceramic pad such that a large flat face was vertical and in contact with the metal mass 24. The diamond synthesis conditions were maintained for a period of 60 hours during which time diamond grew on each seed. It was found that each seed had a diamond mass of between 0,7 carats and 0,97 carats grown on it. It was noted that two of the $\alpha$-silicon carbide seed crystals had twinned planes which intersected the faces in contact with the metal mass 24. The diamond crystals which grew from these seeds were themselves twinned. Thus, by deliberately choosing twin seeds it is possible to grow twinned diamonds.

## Claims

1. A method of producing diamond crystals including the steps of placing a reaction vessel in the reaction zone of a high temperature/high pressure apparatus, the reaction vessel containing seed material separated from a source (26) of substantially pure carbon by mass (24) of metallic catalyst/solvent for diamond synthesis, there being no isolating layer or nucleation suppressing layer disposed between the seed material (30) and the mass (24) of metallic catalyst/solvent, and the non-diamond seed material (30) being unable to react to any significant extent with the metallic catalyst/solvent and having a melting point above that of the metallic catalyst/solvent under the applied conditions of temperature and pressure, subjecting the contents of the reaction vessel to conditions of temperature and pressure in the diamond stable region of the carbon phase diagram such that a temperature gradient is created between the seed material (30) and the carbon source (26) with the seed material (30) being located at a point near the minimum value of temperature for the temperature gradient and the source of carbon (26) being located at a point near the maximum value of temperature, and maintaining these conditions for a time sufficient to produce large diamond crystals on the seed material characterised in that the seed material consists solely of tetrahedrally bonded crystalline non-diamond seed material (30).

2. A method of claim 1 wherein the non-diamond seed material (30) has a sphalerite structure.

3. A method according to claim 2 wherein the non-diamond seed material (30) is selected from cubic boron nitride, $\beta$-silicon carbide, boron phosphide and aluminium phosphide.

4. A method according to claim 1 wherein the non-diamond seed material (30) is $\alpha$-silicon carbide.

5. A method according to claim 1 wherein the non-diamond seed material (30) has a wurzite structure.

6. A method according to claim 5 wherein the non-diamond seed material (30) is selected from aluminium nitride and boron nitride.

7. A method according to any one of the preceding claims wherein the non-diamond seed material (30) is located in a surface (32) of a pad (34) in the reaction vessel.

8. A method according to any one of the preceding claims wherein the conditions of temperature and pressure are maintained for a period sufficient to produce diamond crystals of at least 0,2 carats in size.

9. A method according to any one of the preceding claims wherein the conditions of temperature and pressure are maintained for a period sufficient to produce diamond crystals of at least 1mm in size.

## Revendications

1. Méthode de fabrication de cristaux de diamant comportant les étapes suivantes :
   - mise en place d'un vase à réaction dans la zone réactionnelle d'un appareil pour haute pression et haute température, le vase à réaction contenant un matériau germe séparé d'une source (26) de carbone essentiellement pur par une masse (24) de solvant/catalyseur métallique convenant pour la synthèse du diamant, ceci en l'absence d'une couche isolante ou d'une couche inhibitrice de nucléation entre le matériau germe (30) et la masse (24) de solvant/catalyseur métallique, le matériau germe autre que du diamant (30) étant choisi pour ne pas réagir de façon notable avec le solvant/catalyseur métallique et ayant un point de fusion plus élevé que celui du solvant/catalyseur métallique dans les conditions de température et de pression appliquées,
   - application au contenu du vase à réaction de conditions de température et de pression correspondant à celles de la région de stabilité du diamant dans le diagramme de phase du carbone, ceci d'une manière telle qu'un gradient de température est créé entre le matériau germe (30) at la source de carbone (26), le matériau germe se trouvant à un point proche du minimum de température du gradient de température et la source de carbone (26) se trouvant à un point proche du maximum de température du gradient de température,
   - et maintien de ces conditions pendant un temps suffisant pour permettre la formation de grands cristaux de diamant sur le matériau germe, caractérisée en ce que le matériau germe est constitué exclusivement par un matériau germe (30) autre que du diamant et présentant une srtucture cristalline à liaison de nature tétraédrique,

2. Méthode selon la revendication 1, caractérisée en ce que le matériau germe autre que du diamant (30) a une structure de sphalérite.

3. Méthode selon la revendication 2, caractérisée en ce que le matériau germe (30) autre que du diamant est choisi parmi le nitrure de bore cubique, le carbure de silicium-β, le phosphure de bore et le phosphure d'aluminium.

4. Méthode selon la revendication 1, caractérisée en ce que le matériau germe (30) autre que du diamant est du carbure de silicium-α.

5. Méthode selon la revendication 1, carctérisée en ce que le matériau germe (30) autre que du diamant a une structure de wurtzite.

6. Méthode selon la revendication 5, caractérisée en ce que le matériau germe (30) autre que du diamant est choisi parmi le nitrure d'aluminium et le nitrure de bore.

7. Méthode selon l'une quelconque des revendications précédentes, caractérisée en ce que le matériau germe (30) autre que du diamant est placé dans une surface (32) d'un bloc (34) dans un vase à réaction.

8. Méthode selon l'une quelconque des revendications précédentes, caractérisée en ce que les conditions de température et de pression sont maintenues pendant un intervalle de temps suffisant pour obtenir des cristaux de diamant ayant une dimension d'au moins 0,2 carat.

9. Méthode selon l'une quelconque des revendications précédentes, caractérisée en ce que les conditions de température et de pression sont maintenues pendant un intervalle de temps suffisant pour obtenir des cristaux de diamant ayant une dimension d'au moins 1 mm.

**Patentansprüche**

1. Verfahren zur Herstellung von Diamantkristallen, einschließend die Schritte der Einbringung eines Reaktionsgefäßes in die Reaktionszone einer Hochtemperatur/Hochdruck-Apparatur, wobei das Reaktionsgefäß Kristallkeim-Material enthält, abgeschieden aus einer Quelle (26) von im wesentlichen reinem Kohlenstoff durch die Masse (24) von metallischem Katalysator/Lösungsmittel zur Diamantsynthese, wobei keine Isolierschicht oder Schicht zur Unterdrückung der Keimbildung zwischen Kristallkeim-Material (30) und der Masse (24) von metallischem Katalysator/Lösungsmittel angeordnet ist, und wobei das Nichtdiamant-Kristallkeim-Material (30) nicht zu irgendeinem signifikanten Ausmaß mit dem metallischen Katalysator/-Lösungsmittel reagieren kann und einen Schmelzpunkt aufweist, der bei den angewandten Temperatur- und Druckbedingungen über dem des metallischen Katalysators/Lösungsmittels liegt, Aussetzen des Inhalts des Reaktionsgefäßes Temperatur- und Druckbedingungen in der Diamantstabilen Region des Kohlenstoff-Phasendiagramms, so daß ein Temperaturgradient zwischen dem Kristallkeim-Material (30) und der Kohlenstoff-Quelle (26) erzeugt wird, wobei das Kristallkeim-Material (30) sich an einem Punkt in der Nähe des Temperaturminimums des Temperaturgradienten befindet, und die Kohlenstoff-Quelle (26) sich an einem Punkt in der Nähe des Temperaturmaximums befindet, und Aufrechterhalten dieser Bedingungen für eine hinreichend lange Zeit, um große Diamantkristalle auf dem Kristallkeim-Material zu erzeugen, dadurch gekennzeichnet, daß das Kristallkeim-Material nur aus tetraedrisch gebundenem, kristallinem Nichtdiamant-Kristallkeim-Material (30) besteht.

2. Verfahren nach Anspruch 1, wobei das Nichtdiamant-Kristallkeim-Material (30) eine Sphalerit-Struktur besitzt.

3. Verfahren nach Anspruch 2, wobei das Nichtdiamant-Kristallkeim-Material (30) ausgewählt ist aus kubischem Bornitrid, β-Siliciumcarbid, Borphosphid und Aluminiumphosphid.

4. Verfahren nach Anspruch 1, wobei das Nichtdiamant-Kristallkeim-Material (30) α-Siliciumcarbid ist.

5. Verfahren nach Anspruch 1, wobei das Nichtdiamant-Kristallkeim-Material (30) eine Wurtzit-Struktur besitzt.

6. Verfahren nach Anspruch 5, wobei das Nichtdiamant-Kristallkeim-Material (30) ausgewählt ist aus Aluminiumnitrid und Bornitrid.

7. Verfahren nach irgendeinem der vorstehenden Ansprüche, wobei sich das Nichtdiamant-Kristallkeim-Material (30) in einer Oberfläche (32) einer Unterlage (34) im Reaktionsgefäß befindet.

8. Verfahren nach irgendeinem der vorstehenden Ansprüche, wobei die Temperatur- und Druckbedingungen für eine hinreichend lange Zeit aufrechterhalten werden, um Diamantkristalle von wenigstens 0,2 Karat Größe zu erzeugen.

9. Verfahren nach irgendeinem der vorstehenden

**EP 0 322 217 B1**

Ansprüche, wobei die Temperatur- und Druckbedingungen für eine hinreichend lange Zeit aufrechterhalten werden, um Diamantkristalle von wenigstens 1 mm Größe zu erzeugen.